# EUROPEAN PATENT APPLICATION

(11) **EP 2 966 111 A1**
(43) Date of publication of application: **13.01.2016**
(21) Application number: 14760686.7
(22) Date of filing: 04.03.2014
(51) Int. Cl.: C08G 69/18

(54) **METHOD FOR MANUFACTURING NYLON 6**

(30) Priority: 08.03.2013 JP 2013046779
(71) Applicant: Nagase ChemteX Corporation, Osaka-shi, Osaka 550-8668 (JP)
(72) Inventor: YASUI, Tsutomu, Tatsuno-shi Hyogo 679-4124 (JP)
(74) Representative: Vossius & Partner Patentanwälte Rechtsanwälte mbB
(86) International application number: PCT/JP2014/055385
(87) International publication number: WO 2014/136747

(57) **Abstract**

Provided is a method for manufacturing nylon 6, said method being capable of producing a higher degree of crystallinity in a polymer at the end of a polymerization step performed on an anionically polymerizable caprolactam melt. The present invention is a method in which molten caprolactam in a reactor is anionically polymerized in the presence of a carbodiimide compound and both an anionic polymerization catalyst and an activator, neither of which is a carbodiimide compound, and a polymer is obtained from the reactor following the end of the polymerization step, yielding nylon 6 with a degree of crystallinity of at least 42% without raising the temperature of the interior of the reactor from the temperature thereof at the end of the polymerization step.

## Description

### TECHNICAL FIELD

The present invention relates to a method for producing polyamide 6 capable of rendering a polymer of an anionically polymerizable caprolactam higher in crystallinity, and particularly, relates to a method for producing polyamide 6 enhanced in crystallinity by anionically polymerizing a caprolactam in the presence of a carbodiimide compound.

### BACKGROUND ART

Carbodiimide compounds have been conventionally known as an additive for improving the hydrolysis resistance of a polymer, etc. For example, Patent Document 1 discloses a tablet for polymer modification containing a carbodiimide compound, but it only describes that compounding of a carbodiimide compound into a polymer improves hydrolysis resistance and no description is made at all to crystallinity enhancement of the polyamide. Patent Document 2 discloses that compounding of a carbodiimide into a polyamide resin improves hydrolysis resistance, but resultingly no description is made at all to crystallinity enhancement of the polyamide. Patent Document 3 discloses that a polycarbodiimide is compounded into a polyamide resin, but it only describes that oil resistance and heat stability are improved by compounding a carbodiimide compound into a polymer and no description is made at all to crystallinity enhancement of the polyamide.

Patent Document 4 discloses a monomer cast nylon molded article having a degree of crystallinity of 45% or more, but such a high crystallinity is achieved by heat-treating a polyamide molded article over about 10 hours in an oven after molding the resin.

As described above, carbodiimide compounds have been conventionally used as an additive for providing modification of hydrolysis resistance, etc. by addition of carbodiimide compounds to polymers, but there is no finding that the crystallinity of a polymer is enhanced by such addition. The technique conventionally known for improvement of a polyamide in crystallinity is a method of adding a crystal nucleating agent to a polymerized polyamide or a method of heat-treating a polyamide for a long time.

On the other hand, Patent Document 5 discloses a method for producing a composite material by impregnating a reinforcing fiber with a mixed liquid of a caprolactam molten liquid and a liquid catalyst prepared by dissolving a catalyst in a solvent and also discloses use of a carbodiimide as an initiator, but no description is made at all to crystallinity enhancement of the polyamide. Patent Document 6 also discloses a carbodiimide as an activator for constituting a catalyst system for anionic lactam polymerization. However, the carbodiimide is dissolved in a solvent and added and a nucleating agent is separately added for crystallinity enhancement, but no description is made at all to crystallinity enhancement of the polyamide without use of the nucleating agent.

### PRIOR ART DOCUMENT

### PATENT DOCUMENTS

Patent Document 1: JP-A-2004-124010
Patent Document 2: JP-A-2012-41526
Patent Document 3: JP-A-09-328609
Patent Document 4: JP-A-2007-84747
Patent Document 5: JP-A-2005-513206
Patent Document 6: JP-A-10-292041

### DISCLOSURE OF THE INVENTION

### PROBLEMS TO BE SOLVED BY THE INVENTION

Incidentally, a technique of polymerizing an anionically polymerizable caprolactam molten liquid without using a solvent, such as a monomer casting method, is also known as a technique of performing polyamide polymerization at a molding and processing site. In use of this method, if the crystallinity of the polyamide is further enhanced at the completion of the polyamide polymerization step without performing a prolonged heat treatment, which is difficult to perform at a molding and processing site, improvement in characteristics of the on-site polymerizing polyamide, such as dimensional stability and suppression of deterioration in physical properties due to moisture absorption, would be expectable. Moreover, as a result of crystallinity enhancement of polyamide 6, there can be expected improved strength, improved rigidity, improved hardness, improved creep resistance, improved chemical resistance (including, but not being limited to, gasoline resistance, brake oil resistance, and grease resistance), improved abrasion resistance, increased heat distortion temperature, lowered coefficient of linear expansion, lowered water absorbing property, improved gas barrier properties, improved electrical properties, etc. Then, use of a crystal nucleating agent, a nucleation agent, or a nucleating agent, which is a technique conventionally known in the art, may be attempted. A crystal nucleator agent, a nucleation agent, a nucleating agent or the like is a material to be used in expectation for crystallinity enhancement by addition of the agent to a crystalline resin such as polyamide.

However, according to the studies carried out by the inventors, an attempt to use any of conventionally known various crystal nucleating agents, nucleation agents, and nucleator agents (henceforth, these may also be called "crystal nucleating agents" without distinction; they include variously known organic, inorganic, and polymeric crystal nucleating agents) for a monomer casting method resulted in failure of crystallinity to be further enhanced contrary to expectation as described later. That is, a crystal nucleating agent is a material conventionally used in a technique of enhancing a crystallinity by melt-kneading the agent with a polymer, followed by melt-holding, but a technique of adding a crystal nucleating agent to a monomer feedstock for a monomer casting method exhibited no effects on enhancement of the crystallinity of a resin obtained in a monomer casting step. In fact, there is no known prior art document disclosing a technique to achieve a higher crystallinity at the completion of a polymerization step without performing a prolonged heat treatment in polymerization of an anionically polymerizable caprolactam molten liquid, which is generally called a monomer casting method.

Thus, it is an object of the present invention to provide a method for producing polyamide 6 and a polyamide 6 crystallinity enhancer both capable of rendering a polymer higher in crystallinity at the completion of the step of polymerizing an anionically polymerizable caprolactam molten liquid than a polyamide obtained at the completion of polymerization without using such method.

### SOLUTIONS TO THE PROBLEMS

The present invention provides a method for producing polyamide 6, comprising anionically polymerizing a molten caprolactam in the presence of a carbodiimide compound and an anionic polymerization catalyst that is not a carbodiimide compound.

In one aspect of the present invention, a feedstock composition A containing a caprolactam and an anionic polymerization catalyst and a feedstock composition B containing a caprolactam and a carbodiimide compound, both having previously been prepared, are melt-mixed and allowed to react in a polymerization step.

In another aspect of the present invention, an activator that is not a carbodiimide compound is allowed to exist in the polymerization step.

The present invention also provides a polyamide 6 crystallinity enhancer for being added to a molten caprolactam when anionically polymerizing the molten caprolactam, comprising a carbodiimide compound as an active ingredient.

The present invention provides a feedstock for synthesizing polyamide 6 comprising a feedstock composition A containing a caprolactam and an anionic polymerization catalyst and a feedstock composition B containing a caprolactam, an activator, and at least one carbodiimide compound selected from the group consisting of aromatic carbodiimide compounds and alicyclic carbodiimide compounds, and also provides a feedstock for synthesizing polyamide 6 comprising the feedstock compositions A and B and further a feedstock composition C containing 60 to 90% by weight of all feedstock caprolactams.

### ADVANTAGES OF THE INVENTION

(1) According to the production method of the present invention, it is possible to render the polymer higher in crystallinity at the completion of the step of polymerizing an anionically polymerizable caprolactam, and it is possible to set the degree of crystallinity of a polyamide 6 molded article taken out from a die immediately after polymerization by a monomer casting method to preferably 42% or more, more preferably 44% or more, even more preferably 45% or more. Therefore, it is possible to further enhance the crystallinity of polyamide 6 prepared by on-site polymerization without compounding a crystal nucleating agent into the polymer or heat-treating the polymer after polymerization.
(2) According to the production method of the present invention, it is possible to obtain polyamide 6 having an enhanced crystallinity and, as a result, the dimensional stability of the polyamide 6 molded article is improved and the characteristics of the molded article, such as suppression of deterioration in physical properties due to moisture absorption, are improved. Moreover, as a result of enhancement in the crystallinity of polyamide 6, it is possible to obtain a molded article having superior characteristics, such as improved strength, improved rigidity, improved hardness, improved creep resistance, improved chemical resistance (for example, gasoline resistance, brake oil resistance, and grease resistance), improved abrasion resistance, increased heat distortion temperature, lowered coefficient of linear expansion, lowered water absorbing property, improved gas barrier properties, and improved electrical properties.
(3) The polyamide 6 crystallinity enhancer of the present invention is devised by finding conventionally unknown characteristics of a carbodiimide compound such that compounding of a caprolactam into polyamide 6 obtained by a technique of polymerizing an anionically polymerizable caprolactam molten liquid drastically enhances the crystallinity of the resulting polymer, and the enhancer can be used as a crystal nucleating agent for polyamide 6.
(4) The feedstock for synthesizing polyamide 6 of the present invention can afford polyamide 6 which is enhanced in crystallinity by polymerization without requiring a prolonged heat treatment, and it is a storage-stable composition.

### MODE FOR CARRYING OUT THE INVENTION

The production method of the present invention includes the step of anionically polymerizing a molten caprolactam in the presence of a carbodiimide compound and an anionic polymerization catalyst that is not a carbodiimide compound.

The carbodiimide compound used in the production method of the present invention may be any compound having a carbodiimide group, and includes monomers, oligomers, and polymers of carbodiimides; specifically, examples of the monomers include aliphatic carbodiimide compounds such as diisopropylcarbodiimide and dioctadecylcarbodiimide, aromatic carbodiimide compounds such as diphenylcarbodiimide, bis(2,6-dimethylphenyl)carbodiimide, bis(2,6-diethylphenyl)carbodiimide, bis(2,6-diisopropylphenyl)carbodiimide, bis(2,6-di-tert-butylphenyl)carbodiimide, N,N'-di-o-tolylcarbodiimide, N,N'-di-p-tolylcarbodiimide, bis(2,4,6-trimethylphenyl)carbodiimide, bis(2,4,6-triisopropylphenyl)carbodiimide and bis(2,4,6-triisobutylphenyl)carbodiimide, alicyclic carbodiimide compounds such as dicyclohexylcarbodiimide. Examples of the oligomers range from a dimer in which two molecules of the same monomer or different monomers listed above are bonded to each other to those in which many molecules of said monomers are bonded together to have a molecular weight of less than 10000 (preferably, less than 5000). Examples of polycarbodiimide include aliphatic polycarbodiimide compounds such as poly(diisopropylcarbodiimide), aromatic polycarbodiimide compounds such as poly(4,4'-diphenylmethanecarbodiimide), poly(p-phenylenecarbodiimide), poly(m-phenylenecarbodiimide), poly(diisopropylphenylenecarbodiimide) and poly(triisopropylphenylenecarbodiimide), alicyclic polycarbodiimide compounds such as poly(4,4'-dicyclohexylmethanecarbodiimide). Of these, aromatic carbodiimide compounds and alicyclic carbodiimide compounds are preferable from the viewpoint that high crystallinity polyamide 6 can be obtained, bis(2,6-diisopropylphenyl)carbodiimide, dicyclohexylcarbodiimide, Hydorostab 3 (trade name) (an oligomer of carbodiimide compound; produced by Schafer Additivsysteme GmbH), diisopropylcarbodiimide, poly(4,4-dicyclohexylmethanecarbodiimide) and Carbodilite HMV-15CA (trade name) (poly(4,4-dicyclohexylmethanecarbodiimide) end-capped with isocyanate; produced by Nisshinbo Chemical Inc.) are more preferable, and bis(2,6-diisopropylphenyl)carbodiimide and dicyclohexylcarbodiimide are even more preferable.

Usually, the compounding amount of the carbodiimide compound is preferably 0.1 to 10 parts by weight, more preferably 0.2 to 6.0 parts by weight per 100 parts by weight of the caprolactam.

In the present invention, a handling property can be improved by previously processing a carbodiimide compound into a solid, granular, or powdery composition in which the compound is mixed with a caprolactam or into a wet solid composition containing a solid component and a liquid component, and then fabricating the composition into a polyamide 6 crystallinity enhancer for being added to a molten caprolactam in anionically polymerizing a molten caprolactam. In this case, the content of the carbodiimide compound in the enhancer may be adjusted, for example, to 5% by weight or more, and the content in the enhancer may be suitably adjusted so that the above compounding amount relative to the reactor feed amount of a caprolactam can be easily attained.

The anionic polymerization catalyst for use in the production method of the present invention may be one that is known in the art, and examples thereof may include lactamates such as alkali metal salts of caprolactams, an alkali metal, an alkaline earth metal, and a hydride, an oxide, a hydroxide, a carbonate, an alkylated compound, an alkoxide compound and a Grignard compound of these metals. The alkali metal is at least one selected from the group consisting of Li, Na, K, Rb and Cs; of these, Na or K is preferable from the standpoint of reactivity and economical efficiency. The catalyst that is not a carbodiimide compound is preferable because it can prevent gelation of a feedstock composition. As the catalyst, lactamates such as Na or K salts of caprolactams are preferable.

Usually, the compounding amount of the polymerization catalyst is preferably 0.02 to 2.0 mol per 100 mol of the caprolactam.

In the production method of the present invention, an activator that is not a carbodiimide compound is preferably allowed to exist in the polymerization step as an optional component. Examples of the activator include isocyanates, acyllactams, carbamidolactams, isocyanurate derivatives, acid halides, and urea derivatives. Specific examples include publicly known organic isocyanates such as n-butylisocyanate, phenylisocyanate, octylisocyanate, 1,6-hexamethylenediisocyanate, tolylenediisocyanate and isophoronediisocyanate, N-acetyl-epsilon-caprolactam, 1,6-hexamethylene biscarbamidolactam, triallyl isocyanurate, terephthaloyl chloride and 1,3-diphenylurea. Of these, at least one compound selected from the group consisting of isocyanates, acyllactams and N-acetylcaprolactam is preferable. As the activator, a compound that is not a carbodiimide compound is used.

When the activator is used, the compounding amount thereof is usually in such an amount that the amount of functional groups contained in the activator may be 0.02 to 2.0 mol per 100 mol of the caprolactam.

In the present invention, when these feedstocks are used in the polymerization step, a feedstock composition A containing a caprolactam and an anionic polymerization catalyst and a feedstock composition B containing a caprolactam and a carbodiimide compound may be prepared in advance and then melt-mixed and allowed to react. As the feedstock compositions A and B, ones prepared in advance separately may be used. Of course, a preparation step may be provided before the polymerization step. Preferably, the activator can be compounded into the feedstock composition B. The content of the caprolactam in each of the feedstock compositions A and B may be arbitrary, for example, the content may be either the same amount (weight) or different amount. The ratio of the amount of the feedstock composition A used to the amount of the feedstock composition B used may be adjusted appropriately and may be, for example, the same amount (weight). Moreover, a feedstock composition C composed only of a caprolactam may be prepared and then the feedstock compositions A, B and C may be melt-mixed. In this case, the content of the caprolactam in the individual feedstock compositions to be fed may be adjusted appropriately according to the amount ratio of the feedstock compositions A, B and C to be used. For example, 60 to 90% by weight of all feedstock caprolactams to be fed may be contained in the feedstock composition C. For example, the weight ratio of the use amount of the feedstock compositions A, B and C may be adjusted to 20:20:65, the composition of the feedstock composition A may be adjusted to 18.8 parts by weight of the caprolactam and 1.2 parts by weight of the catalyst, the composition of the feedstock composition B may be adjusted to 16.2 parts by weight of the caprolactam, 1.9 parts by weight of the active agent, and 1. 9 parts by weight of the carbodiimide compound, and the composition of the feedstock composition C may be adjusted to 65 parts by weight of the caprolactam. The amounts, however, are not limited to those described above and they may be used in a suitable ratio along the object of the present invention.

In the present invention, it is possible to prepare in advance a feedstock for synthesizing polyamide 6 comprising the feedstock composition A containing a caprolactam and an anionic polymerization catalyst and the feedstock composition B containing a caprolactam, an activator, and at least one carbodiimide compound selected from the group consisting of aromatic carbodiimide compounds and alicyclic carbodiimide compounds, and further comprising the feedstock composition C containing 60 to 90% by weight of all feedstock caprolactams, and then to melt-mix the feedstock compositions and use the resultant for the polymerization step.

In the production method of the present invention, various inorganic fillers conventionally known in the art may further be compounded in the reaction feedstock as long as the effect of the present invention is not impaired. The type and compounding amount of the inorganic filler may be suitably selected according to the intended use and the viscosity of the composition. Examples of the inorganic filler include fused silica powder, quartz glass powder, crystalline silica powder, glass microfiber, talc, alumina powder, calcium silicate powder, calcium carbonate powder, antimony oxide powder, barium sulfate powder, titanium oxide powder and aluminum hydroxide powder.

The compounding amount of the inorganic filler is not particularly limited, but it is usually 10 to 70 parts by weight per 100 parts by weight of the caprolactam.

Moreover, additives, such as a heat stabilizer, a light stabilizer, a flame retardant and an internal mold releasing agent, may be compounded into the reaction feedstock as necessary. Examples of the heat stabilizer include hindered phenols, examples of the light stabilizer include hindered amines, and examples of the flame retardant include melamine phosphate. The compounding amount thereof is not particularly limited and a compounding amount commonly applied may be used. In the present invention, solvents need not be used, and rather no use of a solvent is preferred. Use of a solvent is likely to cause foaming.

Additives such as the inorganic filler and the heat stabilizer may be contained in one or two or more of the feedstock compositions A and B and further C, if these feedstock compositions are used.

In the anionic polymerization step, it is possible to prepare in advance a synthesis feedstock comprising the feedstock composition A and the feedstock composition B, preferably the feedstock composition B containing a caprolactam, an activator, and at least one carbodiimide compound selected from the group consisting of aromatic carbodiimide compounds and alicyclic carbodiimide compounds, and to mix and use the two compositions at the time of polymerization. When taking into account the melting temperature of the caprolactam, the melt-heating temperature at this time may be about 100 to about 110°C. The anionic polymerization temperature is preferably, for example, 110 to 180°C, more preferably 140°C to 170°C. Generally, the time required for the polymerization step is preferably 2 minutes to 50 minutes, more preferably 5 minutes to 40 minutes. The reactor used at this time may be, but is not limited to, a heatable molding die, for example.

After the completion of the polymerization step, a polymer is obtained from the reactor preferably without raising the temperature within the reactor from the temperature at the completion of the polymerization step. The completion of the polymerization step is the time point when a time required for the polymerization step has passed. Therefore, in the production method of the present invention, a polymer is formed in the reactor when a time required for the polymerization step has passed, and the formed polymer can be obtained immediately or after cooling the reactor as necessary, for example, by releasing the polymer from a die as the reactor. Thus, the production method of the present invention does not require a heat treatment as a post treatment after polymerization, which treatment is generally performed in order to enhance a crystallinity. Even when polyamide 6 is obtained from the reactor immediately after the polymerization, the crystallinity thereof is significantly enhanced as compared with the case where a carbodiimide compound, which is an active ingredient of the crystallinity enhancer in the present invention, is not used, and the polyamide can preferably have a degree of crystallinity of 42% or more, more preferably 44% or more, and even more preferably 45% or more.

In the production method of the present invention, for example, the step of impregnating a reinforcing fiber with a monomer molten liquid may be performed in order to produce a fiber-reinforced composite, as necessary.

### EXAMPLES

The present invention will be described in more detail below with reference to examples, but the following description is only for illustration and the present invention is not limited by these examples.

The meanings of the abbreviations used in the following examples and comparative examples are as follows.
Carbodiimide compound 1: bis(2,6-diisopropylphenyl)carbodiimide
Carbodiimide compound 2: Hydorostab 3 (trade name) (an oligomer of carbodiimide compound; produced by Schafer Additivsysteme GmbH),
Carbodiimide compound 3: dicyclohexylcarbodiimide
Carbodiimide compound 4: diisopropylcarbodiimide
Carbodiimide compound 5: Carbodilite LA-1 (trade name) (poly(4,4-dicyclohexylmethanecarbodiimide); produced by Nisshinbo Chemical Inc.)
Carbodiimide compound 6: Carbodilite HMV-15CA (trade name) (Carbodilite LA-1 end-capped with an isocyanate; produced by Nisshinbo Chemical Inc.)
Carbodiimide compound 7: Carbodilite V-05 (trade name) (carbodiimide prepared using tetramethylxylylene diisocyanate as feedstock; produced by Nisshinbo Chemical Inc.)
Catalyst 1: sodium lactamate
Activator 1: Duranate D101 (trade name) (hexamethylenediisocyanate-based polyisocyanate; produced by Asahi Kasei Chemicals Corporation)
Activator 2: hexamethylenediisocyanate

### Examples 1-1 to 1-5, 2 to 6, Comparative Example 1

Feedstock components shown in Table 1 were fed to a reactor. Regarding the feedstock components, a feedstock composition A in which a caprolactam and a catalyst were mixed and a feedstock composition B in which a caprolactam, an activator and a carbodiimide compound were mixed were previously prepared, and then the two compositions were mixed in equal amounts (parts by weight) and fed to a reactor. The feedstock compositions were molten at 100°C and then used. The polymerization time in the reactor was set to 30 minutes and the polymerization temperature was set to 150°C. After lapse of the polymerization time, a polymer was immediately taken out from the reactor. The crystallinity of the polymer obtained was calculated by dividing the melting heat quantity of a crystal portion determined from a peak area obtained by measuring the polymer at a temperature raising rate of 20°C/min with a differential scanning calorimeter DSC 6220 manufactured by Seiko Instruments, Inc., by 188 J/g, which is a theoretical value at 100% crystallinity. The results are shown in Table 1. The values of the compounding amounts in Table 1 are in parts by weight. The compounding amount of Catalyst 1 is an amount to be 1.0 mol% relative to the molar amount of the caprolactam, and the compounding amount of Activator 1 is an amount to provide 1.0 mol% of functional groups relative to the molar amount of the caprolactam.

**[Table 1]**

| | Example 1-1 | Example 1-2 | Example 1-3 | Example 1-4 | Example 1-5 | Example 2 | Example 3 | Example 4 | Example 5 | Example 6 | Comparative Example 1 |
|---|---|---|---|---|---|---|---|---|---|---|---|
| Caprolactam | 100 | 100 | 100 | 100 | 100 | 100 | 100 | 100 | 100 | 100 | 100 |
| Carbodiimide compound 1 | 0.43 | 0.95 | 1.9 | 3.8 | 5.7 | - | - | - | - | - | - |
| Carbodiimide compound 2 | - | - | - | - | - | 0.95 | - | - | - | - | - |
| Carbodiimide compound 3 | - | - | - | - | - | - | 0.95 | - | - | - | - |
| Carbodiimide compound 4 | - | - | - | - | - | - | - | 0.95 | - | - | - |
| Carbodiimide compound 5 | - | - | - | - | - | - | - | - | 0.95 | - | - |
| Carbodiimide compound 6 | - | - | - | - | - | - | - | - | - | 0.95 | - |
| Carbodiimide compound 7 | - | - | - | - | - | - | - | - | - | - | - |
| Catalyst 1 | 1.2 | 1.2 | 1.2 | 1.2 | 1.2 | 1.2 | 1.2 | 1.2 | 1.2 | 1.2 | 1.2 |
| Activator 1 | 1.9 | 1.9 | 1.9 | 1.9 | 1.9 | 1.9 | 1.9 | 1.9 | 1.9 | 1.9 | 1.9 |
| Crystallinity (%) | 43.9 | 45.3 | 45.2 | 43.0 | 44.8 | 42.5 | 44.7 | 42.6 | 42.1 | 42.1 | 40.7 |

### Reference Examples 1 to 7

Polymerization of a caprolactam was attempted in the same manner as in Comparative Example 1 except that each of the crystal nucleating agents given in Table 2 was used in an amount of 1.0 part by weight and each of the activators 2 was used in an amount of 0.7 parts by weight while setting the polymerization time in the reactor to 60 minutes and the polymerization temperature to 160°C.

**[Table 2]**

| | Trade Name | Ingredient |
|---|---|---|
| Reference Example 1 | PINECRYSTAL KM-1500 (produced by Arakawa Chemical Industries, Ltd.) | Rosin derivative |
| Reference Example 2 | PINECRYSTAL KR-50M (produced by Arakawa Chemical Industries, Ltd.) | Rosin derivative |
| Reference Example 3 | ADEKA STAB NA-11 (produced by ADEKA) | Sodium 2,2'-methylenebis (4,6-di-tert-butylphenyl)phosphate |
| Reference Example 4 | ADEKA STAB NA-21 (produced by ADEKA) | Aluminum 2,2-methylenebis (4,7-di-tert-butylphenyl)phosphate |
| Reference Example 5 | NJSTAR NU-100 (produced by New Japan Chemical Co., Ltd.) | N,N'-dicyclohexyl-2,6-naphthalene dicarboxamide |
| Reference Example 6 | Licomont CaV102 PDR (produced by Clariant Japan) | Calcium montanate |
| Reference Example 7 | Licomont NaV101 (produced by Clariant Japan) | Sodium montanate |

### Results of Reference Examples 1, 2, 4 to 7

In Reference Examples 1 and 2, a polymer was not obtained due to the occurrence of polymerization inhibition of a caprolactam. In Reference Examples 4 to 7, all or a portion of the crystal nucleating agent was not dissolved in a caprolactam molten liquid and failed to act as a crystal nucleating agent.

### Results of Reference Example 3

Since the crystal nucleating agent of Reference Example 3 was dissolved in a caprolactam molten liquid, Reference Examples 3-1 to 3-5 were prepared in the compounding shown in Table 3. The results of Reference Example 3 are shown as Reference Examples 3-1 to 3-5 in Table 3. Reference Example 3-1 is a blank test. The values of the compounding amounts in Table 3 are in parts by weight.

**[Table 3]**

| | Reference Example 3-1 | Reference Example 3-2 | Reference Example 3-3 | Reference Example 3-4 | Reference Example 3-5 |
|---|---|---|---|---|---|
| Caprolactam | 100 | 100 | 100 | 100 | 100 |
| Crystal nucleating agent of Reference Example 3 | 0 | 0.3 | 0.6 | 1.2 | 2 |
| Catalyst 1 | 1.2 | 1.2 | 1.2 | 1.2 | 1.2 |
| Activator 2 | 0.7 | 0.7 | 0.7 | 0.7 | 0.7 |
| Crystallinity (%) | 41 | 38 | 39 | 42 | 39 |

In Reference Example 3, the results given in Table 3 with variation in the compounding amount of the crystal nucleating agent show that the crystallinity of the polymer lowered or slightly increased relative to the blank and no effects on crystallinity enhancement were exhibited.

On the other hand, as shown in Table 1, the results of the examples show that use of a carbodiimide compound as a crystallinity enhancer remarkably enhanced the crystallinity of polyamide 6 obtained by a so-called monomer casting method without using a known crystallinity enhancement procedure such as a known crystal nucleating agent or a heat treatment of a polymer.

## Claims

1. A method for producing polyamide 6, comprising anionically polymerizing a molten caprolactam in the presence of a carbodiimide compound and an anionic polymerization catalyst that is not a carbodiimide compound.

2. The production method according to claim 1, wherein the carbodiimide compound is at least one selected from the group consisting of aromatic carbodiimide compounds and alicyclic carbodiimide compounds.

3. The production method according to claim 2, wherein the carbodiimide compound is bis(2,6-diisopropylphenyl)carbodiimide and/or dicyclohexylcarbodiimide.

4. The production method according to any one of claims 1 to 3, wherein the anionic polymerization catalyst is a lactamate of an alkali metal salt, an alkali metal, an alkaline earth metal, a hydride, an oxide, a hydroxide, a carbonate, an alkylated compound, an alkoxide compound, or a Grignard compound of these metals.

5. The production method according to any one of claims 1 to 4, wherein an activator that is not a carbodiimide compound is allowed to exist.

6. The production method according to claim 5, wherein the activator is at least one compound selected from the group consisting of isocyanates, acyllactams and N-acetylcaprolactam.

7. The production method according to any one of claims 1 to 4, wherein a feedstock composition A containing a caprolactam and an anionic polymerization catalyst and a feedstock composition B containing a caprolactam and a carbodiimide compound, both having previously been prepared, are melt-mixed and allowed to react.

8. The production method according to claim 7, wherein an activator that is not a carbodiimide compound is contained in the feedstock composition B.

9. The production method according to claim 8, wherein the activator is at least one compound selected from the group consisting of isocyanates, acyllactams and N-acetylcaprolactam.

10. The production method according to any one of claims 7 to 9, wherein a feedstock composition C composed of a caprolactam and previously prepared is further melt-mixed.

11. The production method according to claim 10, wherein 60 to 90% by weight of all the caprolactams is contained in the feedstock composition C.

12. The production method according to any one of claims 1 to 11, wherein polyamide 6 to be obtained has a degree of crystallinity of 42% or more.

13. The production method according to any one of claims 1 to 12, wherein after completion of the anionic polymerization step, a polymer is obtained from a reactor without raising a temperature within the reactor from the temperature at the completion of the polymerization step.

14. A polyamide 6 crystallinity enhancer for being added to a molten caprolactam when anionically polymerizing the molten caprolactam, the crystallinity enhancer comprising a carbodiimide compound as an active ingredient.

15. The crystallinity enhancer according to claim 14, wherein the carbodiimide compound is at least one selected from the group consisting of aromatic carbodiimide compounds and alicyclic carbodiimide compounds.

16. A feedstock for synthesizing polyamide 6, comprising:
a feedstock composition A containing a caprolactam and an anionic polymerization catalyst; and
a feedstock composition B containing a caprolactam, an activator, and at least one carbodiimide compound selected from the group consisting of aromatic carbodiimide compounds and alicyclic carbodiimide compounds.

17. A feedstock for synthesizing polyamide 6, comprising:
a feedstock composition A containing a caprolactam and an anionic polymerization catalyst;
a feedstock composition B containing a caprolactam, an activator, and at least one carbodiimide compound selected from the group consisting of aromatic carbodiimide compounds and alicyclic carbodiimide compounds; and
a feedstock composition C containing 60 to 90% by weight of all feedstock caprolactams.

18. The feedstock for synthesizing polyamide 6 according to claim 16 or 17, wherein the carbodiimide compound is bis(2,6-diisopropylphenyl)carbodiimide and/or dicyclohexylcarbodiimide.
